(19) Europäisches Patentamt / European Patent Office / Office européen des brevets

(11) **EP 3 550 277 B1**

(12) **EUROPEAN PATENT SPECIFICATION**

(45) Veröffentlichungstag und Bekanntmachung des Hinweises auf die Patenterteilung:
**05.01.2022 Patentblatt 2022/01**

(21) Anmeldenummer: **17876406.4**

(22) Anmeldetag: **01.11.2017**

(51) Int Cl.:
**G01M 13/04** *(2019.01)*    **G01M 13/045** *(2019.01)*

(86) Internationale Anmeldenummer:
**PCT/CN2017/108878**

(87) Internationale Veröffentlichungsnummer:
**WO 2018/099232 (07.06.2018 Gazette 2018/23)**

(54) **VERFAHREN UND VORRICHTUNG ZUR BEWERTUNG DER LEBENSDAUER EINES LAGERS**

METHOD AND DEVICE FOR EVALUATING SERVICE LIFE OF BEARING

PROCÉDÉ ET DISPOSITIF D'ÉVALUATION DE LA DURÉE DE VIE D'UN PALIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2016 CN 201611095596**

(43) Veröffentlichungstag der Anmeldung:
**09.10.2019 Patentblatt 2019/41**

(73) Patentinhaber: **Schaeffler Technologies AG & Co. KG**
**91074 Herzogenaurach (DE)**

(72) Erfinder:
- **ARIMA, Gilson**
  **Shanghai 201100 (CN)**
- **MA, Zikui**
  **Shanghai 201100 (CN)**
- **GUO, Lei**
  **Shanghai 200000 (CN)**
- **WEI, Lai**
  **Shanghai 201804 (CN)**
- **HU, Hualiang**
  **201805 Shanghai (CN)**
- **HUANG, Yunsheng**
  **Kunshan**
  **Jiangsu 215300 (CN)**

(56) Entgegenhaltungen:
EP-A1- 3 029 449    CN-A- 1 659 427
CN-A- 103 955 750    JP-A- S5 786 735
JP-A- H08 159 151    US-A1- 2002 046 012
US-A1- 2012 239 716    US-A1- 2016 069 775

- **LI, Y. et al.: "Dynamic Prediction for Defect Expanding of Rolling Bearing", Foreign Bearing Technology, no. 1, 31 January 2000 (2000-01-31), pages 41-47, XP009516521, US**
- **SHEN, ZHONGJIE et al.: "Remaining Life Predictions of Rolling Bearing Based on Relative Features and Multivariable Support Vector Machine", Chinese Journal of Mechanical Engineering, vol. 49, no. 2, 31 January 2013 (2013-01-31), pages 183-189, XP9515003, ISSN: 0577-6686**
- **XI'AN HIGHWAY COLLEGE et al.: "Fundamental Vibration Evaluation of Roller Bearing Status Monitoring Technology", Road Machinery & -Construction Mechanization, vol. Vol. 10 (Serial No. 46), no. 5, 31 May 1993 (1993-05-31), pages 19-23, XP009515603, ISSN: 1000-033X**

## Beschreibung

Die vorliegende Anmeldung beansprucht die Priorität der am 01.12.2016 beim chinesischen Patentamt eingereichten chinesischen Patentanmeldung mit der Anmeldenummer 201611095596.3 und der Erfindungsbezeichnung "Verfahren und Vorrichtung zur Bewertung der Lebensdauer eines Lagers".

## Technisches Gebiet

Die vorliegende Erfindung betrifft das Gebiet der Lager und konkret ein Verfahren und eine Vorrichtung zur Bewertung der Lebensdauer eines Lagers.

## Allgemeiner Stand der Technik

Lager sind ein Grundbauteil von Maschinen und Geräten, und die Genauigkeit und Lebensdauer von Lagern spielen eine wichtige Rolle für den ordnungsgemäßen Betrieb von Maschinen und Geräten.

Entsprechend dem Ermüdungsgrad umfasst die Lebensdauer eines Wälzlagers im Wesentlichen die zwei folgenden Abschnitte: die Lebensdauer vor dem Auftreten einer Schälung der Arbeitsfläche des Lagers und die Lebensdauer nach dem Auftreten einer Schälung der Arbeitsfläche des Lagers. Der Prozess vom Beginn des Auftretens einer Schälung der Arbeitsfläche des Lagers über eine starke Schälung bis zur Feststellung des Ausfalls des Lagers ist die Lebensdauer nach dem Auftreten einer Schälung der Arbeitsfläche des Lagers. Im Vergleich zur Lebensdauer vor dem Abschälen der Arbeitsfläche des Lagers ist die Lebensdauer nach dem Abschälen der Arbeitsfläche des Lagers relativ kurz.

Beim Stand der Technik werden im Allgemeinen zur Gewährleistung eines ordnungsgemäßen Betriebs der Maschinen und Geräte Zeitintervalle festgelegt, der Betrieb regelmäßig unterbrochen und Überprüfungen und Reparaturen durchgeführt. Bei einigen komplizierten Systemen kann die Betriebsunterbrechung für Überprüfungen und Reparaturen den regulären Einsatz der Ausrüstung beeinträchtigen und höhere Kosten verursachen.

Stand der Technik ist aus JP H08 159151 A, US 2012/239716 A1, JP S57 86735 A, US 2002/046012 A1 und EP 3 029 449 A1 bekannt.

## Kurzdarstellung der Erfindung

Die von der vorliegenden Erfindung zu lösende Aufgabe ist die Vermeidung einer Beeinträchtigung des regulären Betriebs der Ausrüstung im Prozess der Bewertung der Lebensdauer des Lagers.

Um die oben stehende Aufgabe zu lösen, stellt das Ausführungsbeispiel der vorliegenden Erfindung nach Anspruch 1 ein Verfahren für die Bewertung der Lebensdauer eines Lagers bereit, das Folgendes umfasst: die Ermittlung aktueller Betriebsbedingungen des Lagers; die Erfassung eines aktuellen Vibrationssignals des Lagers unter den aktuellen Betriebsbedingungen und die Berechnung eines aktuellen Vibrationswerts des Lagers; die Ermittlung einer dem aktuellen Vibrationswert des Lagers entsprechenden aktuellen Schälungsfläche der Lageroberfläche sowie einer aktuellen Schälungsrate des Lagers unter den aktuellen Betriebsbedingungen; und die Ermittlung einer Restlebensdauer des Lagers anhand der aktuellen Schälungsfläche der Lageroberfläche und der aktuellen Schälungsrate des Lagers.

Wahlweise umfasst das Verfahren für die Bewertung der Lebensdauer eines Lagers weiterhin die Ermittlung von aktuellen Temperaturinformationen des Lagers; wobei die Ermittlung der Restlebensdauer des Lagers anhand der aktuellen Schälungsfläche der Lageroberfläche und der aktuellen Schälungsrate des Lagers die Ermittlung der Restlebensdauer des Lagers anhand der aktuellen Schälungsfläche der Lageroberfläche, der aktuellen Schälungsrate des Lagers und der aktuellen Temperaturinformationen des Lagers umfasst.

Wahlweise umfasst das Verfahren für die Bewertung der Lebensdauer eines Lagers weiterhin die Ermittlung aktueller Drehzahlinformationen des Lagers; wobei die Ermittlung der Restlebensdauer des Lagers anhand der aktuellen Schälungsfläche der Lageroberfläche und der aktuellen Schälungsrate des Lagers die Ermittlung der Restlebensdauer des Lagers anhand der aktuellen Schälungsfläche der Lageroberfläche, der aktuellen Schälungsrate des Lagers und der aktuellen Drehzahlinformationen des Lagers umfasst.

Wahlweise umfasst das Verfahren für die Bewertung der Lebensdauer eines Lagers weiterhin die Ermittlung aktueller Temperaturinformationen des Lagers und die Ermittlung aktueller Drehzahlinformationen des Lagers; wobei die Ermittlung der Restlebensdauer des Lagers anhand der aktuellen Schälungsfläche der Lageroberfläche und der aktuellen Schälungsrate des Lagers die Ermittlung der Restlebensdauer des Lagers anhand der aktuellen Temperaturinformationen des Lagers, der aktuellen Drehzahlinformationen des Lagers, der aktuellen Schälungsfläche der Lageroberfläche und der aktuellen Schälungsrate des Lagers umfasst.

Wahlweise umfasst die Ermittlung einer dem aktuellen Vibrationswert des Lagers entsprechenden aktuellen Schälungsfläche der Lageroberfläche die Berechnung einer aktuellen Vibrationsklasse des Lagers anhand des aktuellen Vibrationswerts und die Ermittlung einer der aktuellen Vibrationsklasse des Lagers entsprechenden aktuellen Schälungsfläche der Lageroberfläche.

Wahlweise gehört nach der Ermittlung der aktuellen Schälungsfläche der Lageroberfläche zum Umfang weiterhin das Senden einer Erinnerungsinformation zum Tausch des Lagers, wenn die gemessene aktuelle Schälungsfläche der Lageroberfläche größer ist als eine vorab festgelegte erste Fläche.

Wahlweise gehört nach der Ausgabe der Erinnerungsinformation zum Tausch des Lagers zum Umfang weiterhin das Senden einer Warninformation, wenn die gemessene aktuelle Schälungsfläche der Lageroberfläche größer ist als eine vorab festgelegte zweite Fläche; wobei die zweite Fläche größer ist als die erste Fläche.

Das Ausführungsbeispiel der vorliegenden Erfindung nach Anspruch 8 stellt weiterhin eine Vorrichtung für die Bewertung der Lebensdauer eines Lagers bereit, die Folgendes umfasst: eine Einheit zur Ermittlung der Betriebsbedingungen, die verwendet wird, um aktuelle Betriebsbedingungen des Lagers zu ermitteln; eine erste Erfassungseinheit, die verwendet wird, um ein aktuelles Vibrationssignal des Lagers unter den aktuellen Betriebsbedingungen zu erfassen; eine Recheneinheit, die verwendet wird, um einen aktuellen Vibrationswert des Lagers zu berechnen; eine Einheit zur Ermittlung der Schälungsfläche, die verwendet wird, um eine dem aktuellen Vibrationswert des Lagers entsprechende aktuelle Schälungsfläche der Lageroberfläche zu ermitteln; eine Einheit zur Ermittlung der Schälungsrate, die verwendet wird, um eine aktuelle Schälungsrate des Lagers unter den aktuellen Betriebsbedingungen zu ermitteln; eine Einheit zur Ermittlung der Lagerlebensdauer, die verwendet wird, um anhand der aktuellen Schälungsfläche der Lageroberfläche und der aktuellen Schälungsrate des Lagers eine Restlebensdauer des Lagers zu ermitteln.

Wahlweise umfasst die Vorrichtung für die Bewertung der Lebensdauer eines Lagers weiterhin eine zweite Erfassungseinheit, die verwendet wird, um aktuelle Temperaturinformationen des Lagers zu erfassen; wobei die Einheit zur Ermittlung der Lagerlebensdauer verwendet wird, um anhand der aktuellen Schälungsfläche der Lageroberfläche, der aktuellen Schälungsrate des Lagers und der aktuellen Temperaturinformationen des Lagers die Restlebensdauer des Lagers zu ermitteln.

Wahlweise umfasst die Vorrichtung für die Bewertung der Lebensdauer eines Lagers weiterhin eine dritte Erfassungseinheit, die verwendet wird, um aktuelle Drehzahlinformationen des Lagers zu erfassen; wobei die Einheit zur Ermittlung der Lagerlebensdauer verwendet wird, um anhand der aktuellen Schälungsfläche der Lageroberfläche, der aktuellen Schälungsrate des Lagers und der aktuellen Drehzahlinformationen des Lagers die Restlebensdauer des Lagers zu ermitteln.

Wahlweise umfasst die Vorrichtung für die Bewertung der Lebensdauer eines Lagers weiterhin eine vierte Erfassungseinheit, die verwendet wird, um aktuelle Temperaturinformationen des Lagers und aktuelle Drehzahlinformationen des Lagers zu erfassen; wobei die Einheit zur Ermittlung der Lagerlebensdauer verwendet wird, um anhand der aktuellen Temperaturinformationen des Lagers, der aktuellen Drehzahlinformationen des Lagers, der aktuellen Schälungsfläche der Lageroberfläche und der aktuellen Schälungsrate des Lagers die Restlebensdauer des Lagers zu ermitteln.

Wahlweise wird die Einheit zur Ermittlung der Schälungsfläche verwendet, um anhand des aktuellen Vibrationswerts eine aktuelle Vibrationsklasse des Lagers zu berechnen und um die der aktuellen Vibrationsklasse des Lagers entsprechende aktuelle Schälungsfläche der Lageroberfläche zu ermitteln.

Wahlweise umfasst die Vorrichtung für die Bewertung der Lebensdauer eines Lagers weiterhin eine Sendeeinheit zur Tauscherinnerung, die verwendet wird, um eine Erinnerungsinformation zum Tausch des Lagers zu senden, wenn die gemessene aktuelle Schälungsfläche der Lageroberfläche größer ist als eine vorab festgelegte erste Fläche.

Wahlweise umfasst die Vorrichtung für die Bewertung der Lebensdauer eines Lagers weiterhin eine Sendeeinheit zur Warninformation, die verwendet wird, um eine Warninformation zu senden, wenn die gemessene aktuelle Schälungsfläche der Lageroberfläche größer ist als eine vorab festgelegte zweite Fläche; wobei die zweite Fläche größer ist als die erste Fläche.

Im Vergleich zum Stand der Technik weist die technische Lösung des Ausführungsbeispiels der vorliegenden Erfindung folgende Vorteile auf:

Nach der Erfassung eines Vibrationssignals des Lagers kann man einen aktuellen Vibrationswert des Lagers erhalten. Anhand des aktuellen Vibrationswerts des Lagers kann eine entsprechende aktuelle Schälungsfläche der Lageroberfläche ermittelt werden. Anhand der aktuellen Schälungsfläche der Lageroberfläche und der aktuellen Schälungsrate des Lagers unter den aktuellen Betriebsbedingungen des Lagers ergibt sich eine Restlebensdauer des Lagers, wobei der reguläre Betrieb der Maschinen und Geräte nicht beeinträchtigt wird.

Weiterhin kann bei der Ermittlung der Restlebensdauer des Lagers, durch die Erfassung von aktuellen Temperaturinformationen des Lagers und die Bewertung der Restlebensdauer des Lagers anhand der Wirkungsbeziehung zwischen der aktuellen Temperatur des Lagers und der Lebensdauer des Lagers, die Genauigkeit der Bewertung erhöht werden.

Weiterhin kann bei der Ermittlung der Restlebensdauer des Lagers, durch die Erfassung von aktuellen Drehzahlinformationen des Lagers und die Bewertung der Restlebensdauer des Lagers anhand der Wirkungsbeziehung zwischen der aktuellen Drehzahl des Lagers und der Lebensdauer des Lagers, die Genauigkeit der Bewertung erhöht werden.

Weiterhin wird, wenn die gemessene aktuelle Schälungsfläche der Lageroberfläche größer ist als eine vorab festgelegte erste Fläche, eine Erinnerung zum Tausch des Lagers gesendet, und das Arbeitspersonal kann das Lager tauschen.

Außerdem wird, wenn die gemessene aktuelle Schälungsfläche der Lageroberfläche größer ist als eine vorab festgelegte zweite Fläche, eine Warnung gesendet und das Arbeitspersonal daran erinnert, dass das Lager stark beschädigt ist, und so die Sicherheit beim Arbeiten mit der Ausrüstung erhöht.

## Beschreibung der beigefügten Figuren

Fig. 1 zeigt ein Ablaufdiagramm des Verfahrens zur Bewertung der Lebensdauer eines Lagers im Ausführungsbeispiel der vorliegenden Erfindung.

Fig. 2 zeigt eine Kurvendarstellung zur korrespondierenden Beziehung zwischen der Vibrationsklasse und der Schälungsfläche der Lageroberfläche im Ausführungsbeispiel der vorliegenden Erfindung.

Fig. 3 zeigt eine Kurvendarstellung zur korrespondierenden Beziehung zwischen der Schälungsfläche der Oberfläche und der Schälungsrate des Lagers auf der einen Seite und der Restlebensdauer des Lagers auf der anderen Seite im Ausführungsbeispiel der vorliegenden Erfindung.

Fig. 4 zeigt eine schematische Darstellung zum Aufbau der Vorrichtung zur Bewertung der Lebensdauer eines Lagers im Ausführungsbeispiel der vorliegenden Erfindung.

## Ausführungsformen

Beim Stand der Technik werden im Allgemeinen zur Gewährleistung eines ordnungsgemäßen Betriebs der Maschinen und Geräte Zeitintervalle festgelegt, der Betrieb regelmäßig unterbrochen und Überprüfungen und Reparaturen durchgeführt. Oder das Lager wird getauscht, wenn bei der Überprüfung des Lagers stärkere Vibrationen oder eine stärkere Hitzeentwicklung festgestellt werden.

Allerdings kann bei einigen komplizierten Systemen, die ständig in Betrieb sein müssen, eine Betriebsunterbrechung für Überprüfungen und Reparaturen den regulären Einsatz der Ausrüstung beeinträchtigen und höhere Kosten verursachen.

Im Ausführungsbeispiel der vorliegenden Erfindung kann man nach der Erfassung eines Vibrationssignals des Lagers einen aktuellen Vibrationswert des Lagers erhalten. Anhand des aktuellen Vibrationswerts des Lagers kann eine entsprechende aktuelle Schälungsfläche der Lageroberfläche ermittelt werden. Anhand der aktuellen Schälungsfläche der Lageroberfläche und der aktuellen Schälungsrate des Lagers für den aktuellen Betriebszustand des Lagers kann man eine Restlebensdauer des Lagers erhalten, wobei der reguläre Betrieb der Maschinen und Geräte nicht beeinträchtigt wird.

Um die Aufgaben, Merkmale und Vorteile der vorliegenden Erfindung noch deutlicher und leichter verständlich zu machen, wird im Folgenden in Verbindung mit den beigefügten Figuren zu dem konkreten Ausführungsbeispiel der vorliegenden Erfindung eine detaillierte Beschreibung gegeben.

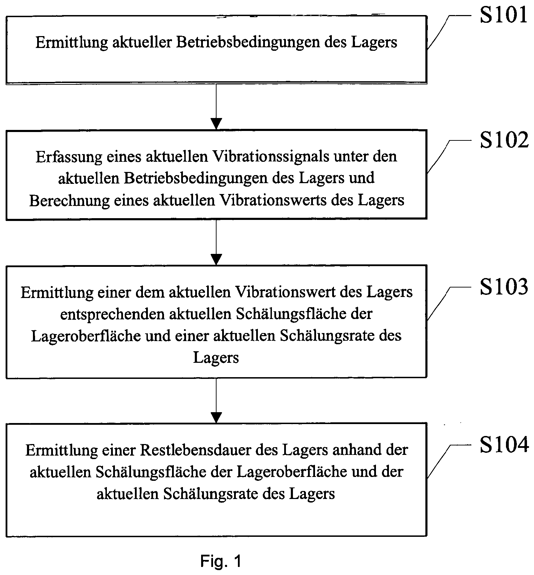

Das Ausführungsbeispiel der vorliegenden Erfindung stellt, wie in Fig. 1 gezeigt, ein Verfahren zur Bewertung der Lebensdauer eines Lagers bereit, das im Folgenden durch konkrete Schritte detailliert beschrieben wird.

In Schritt S101 werden die aktuellen Betriebsbedingungen des Lagers ermittelt.

In einer konkreten Ausführung können Informationen zu den Parametern des Lagers in Echtzeit erfasst werden, um die entsprechenden aktuellen Betriebsbedingungen des Lagers zu ermitteln. Beispielsweise können Informationen wie die Drehzahl des Lagers, die Belastung des Lagers, die Umgebungstemperatur des Lagers etc. in Echtzeit erfasst werden, um die aktuellen Betriebsbedingungen des Lagers zu erhalten.

In Schritt S102 wird das aktuelle Vibrationssignal des Lagers unter den aktuellen Betriebsbedingungen des Lagers erfasst und ein aktueller Vibrationswert des Lagers berechnet.

In einer konkreten Ausführung kann das Vibrationssignal des Lagers in Echtzeit im Betrieb des Lagers erfasst werden. Es kann ein mit dem Lager gekoppelter Vibrationssensor angeordnet werden, wobei über den Vibrationssensor das Vibrationssignal des Lagers erfasst wird. Nach der Ermittlung des aktuellen Vibrationssignals des Lagers kann das aktuelle Vibrationssignal des Lagers verarbeitet und der aktuelle Vibrationswert des Lagers berechnet werden.

In Schritt S103 werden die dem aktuellen Vibrationswert des Lagers entsprechende aktuelle Schälungsfläche der Lageroberfläche sowie die aktuelle Schälungsrate des Lagers ermittelt.

In einer konkreten Ausführung kann die Abbildungsbeziehung zwischen dem Vibrationswert des Lagers und der Schälungsfläche der Lageroberfläche voreingestellt werden. Nach der Berechnung des aktuellen Vibrationswerts des Lagers kann die entsprechende aktuelle Schälungsfläche der Lageroberfläche über eine Tabelle ermittelt werden.

In der tatsächlichen Anwendung können vorab unter vielen verschiedenen Betriebsbedingungen zu Lagern des gleichen Typs mit unterschiedlichen Schälungsflächen der Oberfläche jeweils mehrfache Tests durchgeführt werden. Anhand der in den mehrfachen Tests erhaltenen Parameter wird die Abbildungsbeziehung zwischen dem Vibrationswert des Lagers und der Schälungsfläche der Lageroberfläche aufgebaut.

In der tatsächlichen Anwendung kann man erkennen, dass im Betrieb auch dann bestimmte Vibrationen auftreten können, wenn die Schälungsfläche der Oberfläche 0 beträgt und somit die Lageroberfläche einwandfrei und unbeschädigt ist. Bei unterschiedlichen Betriebsbedingungen ist die Drehzahl aufgrund der möglicherweise unterschiedlichen Belastung des Lagers gegebenenfalls ebenfalls unterschiedlich, und wenn die Schälungsfläche der Lageroberfläche 0 beträgt, sind die Vibrationswerte möglicherweise auch jeweils nicht gleich.

Um den Einfluss von Belastungsänderungen und Drehzahländerungen auf den Vibrationswert des Lagers zu beseitigen, kann in dem Ausführungsbeispiel der vorliegenden Erfindung zu dem aktuellen Vibrationswert des Lagers eine Quantifizierung durchgeführt werden, um die aktuelle Vibrationsklasse des Lagers zu erhalten. Anhand der Vibrationsklasse des Lagers wird eine mit der Schälungsfläche der Lageroberfläche korrespondierende Abbildungsbeziehung aufgebaut. Die Vibrationsklasse des Lagers steht nicht in Beziehung mit der Belastung und der Drehzahl des Lagers. Daher muss in der korrespondierenden Abbildungsbeziehung der Vibrationsklasse des Lagers und der Schälungsfläche der Lageroberfläche nicht der Einfluss berücksichtigt werden, den Belastungsänderungen und Drehzahländerungen auf den Vibrationswert des Lagers haben.

In einer konkreten Ausführung wird nach der Ermittlung des aktuellen Vibrationswerts des Lagers der aktuelle Vibrationswert des Lagers quantifiziert, um eine dem aktuellen Vibrationswert des Lagers entsprechende aktuelle Vibrationsklasse zu erhalten. Nachdem man die aktuelle Vibrationsklasse des Lagers erhalten hat, kann die aktuelle Schälungsfläche der Lageroberfläche ermittelt werden.

Im Ausführungsbeispiel der vorliegenden Erfindung wird nach der Ermittlung des aktuellen Vibrationswerts des Lagers der aktuelle Vibrationswert durch den Vibrationswert für die gleichen Betriebsbedingungen und eine Schälungsfläche der Lageroberfläche, die 0 beträgt, dividiert, und der erhaltene Quotient kann als aktuelle Vibrationsklasse des Lagers fungieren.

Im Folgenden wird der vom Ausführungsbeispiel der vorliegenden Erfindung bereitgestellte Aufbau der Abbildungsbeziehung zwischen der Vibrationsklasse des Lagers und der Schälungsfläche der Lageroberfläche beschrieben.

Unter Nennbetriebsbedingungen ist die Hauptausfallform von Lagern die Ermüdungsschälung. Unter normalen Bedingungen ist die Berechnung der Ermüdungslebensdauer immer eine Berechnung der Lebensdauer vor dem Auftreten einer Schälung der Lageroberfläche. Basierend auf der Theorie von der maximalen dynamischen Scherbeanspruchung (L-P-Theorie) beginnt die Schälung des Lagers an Materialschwachstellen, die unter der Sekundäroberfläche, parallel zur Rollrichtung und in Bereichen mit einer maximalen alternierenden Scherbelastung liegen, und breitet sich allmählich zur Lageroberfläche aus. Die Tiefe der Schälung der Lageroberfläche liegt in der Regel innerhalb eines bestimmten Bereichs und mit der Erhöhung des Ermüdungsgrads vergrößert sich allmählich die Schälungsfläche an der Lageroberfläche und gleichzeitig zeigt sich auch beim Vibrationsgrad des Lagers eine bestimmte Regelmäßigkeit.

In einer konkreten Ausführung können vorab zu einem Lager Tests durchgeführt werden, um Modelle zu erstellen und die korrespondierende Beziehung zwischen der Schälungsfläche der Lageroberfläche und der Vibrationsklasse des Lagers herauszufinden. Damit die erstellten Modelle größere Allgemeingültigkeit besitzen, kann das Lager in Betriebsszenarien mit vielen verschiedenen Betriebsbedingungen getestet werden.

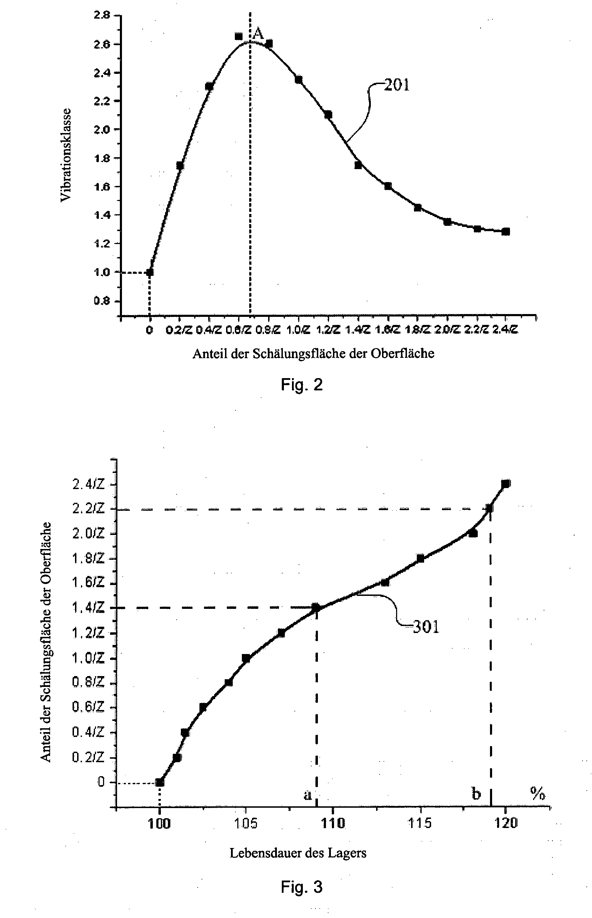

Nachdem unter verschiedenen Betriebsbedingungen mehrfache Tests an einem Lager des gleichen Typs durchgeführt wurden, erhält man eine korrespondierende Beziehung zwischen der Schälungsfläche der Lageroberfläche und der Vibrationsklasse des Lagers. In Fig. 2 wird eine Kurvendarstellung zur korrespondierenden Beziehung zwischen der Vibrationsklasse und der Schälungsfläche der Lageroberfläche im Ausführungsbeispiel der vorliegenden Erfindung gezeigt. In Fig. 2 gibt die Abszisse den Anteil an, den die Schälungsfläche der Lageroberfläche an der gesamten effektiven Fläche der Rollbahn einnimmt und die Ordinate gibt die Vibrationsklasse des Lagers an. Die Vibrationsklasse des Lagers bezieht sich auf das Verhältnis des gemessenen Vibrationswerts des Lagers und des Vibrationswerts ohne eine Schälung an der Lageroberfläche unter gleichen Bedingungen. Bei einer Vibrationsklasse von 1 und wenn an der Lageroberfläche keine Schälung vorhanden ist, liegt auch die Schälungsfläche der Lageroberfläche bei 0.

In Fig. 2 ist erkennbar, dass bei einem Lager unter bestimmten Belastungsbedingungen und mit einer Schälungsfläche der Oberfläche einer einzelnen Rollbahn (Innenring oder Außenring), die sich in einem bestimmten Bereich befindet, die Kurve 201 der Vibrationsklasse des Lagers zunächst allmählich ansteigt und nach dem Erreichen des Extremwerts A allmählich fällt. Eine Ausdrucksform für die Funktion der Vibrationsklasse kann sein:

$$V_{RMS} = f\left(n_i, x\right)$$

(1)

wobei 0<x<2/Z ist, Z die Rollenzahl des Lagers ist, $n_i$ die Drehzahl des Lagerinnenrings ist und x der Anteil einer Mängelfläche einer einzelnen Rollbahn an der gesamten effektiven Fläche dieser Rollbahn ist. Bevor die Schälungsfläche der Lageroberfläche 1/Z der gesamten effektiven Fläche der Rollbahn erreicht, erreicht die Vibrationsklasse des Lagers den Extremwert A.

Nach einer Analyse aus realer physikalischer Sicht gibt es vielfältige Einflussfaktoren, die dazu führen, dass die Änderung der Vibrationsklasse nicht linear verläuft. Unter der Annahme, dass sich die Oberflächenschälung des Lagers im Lastbereich des Lagers befindet, verändert sich die Schälungstiefe nicht. Mit der Vergrößerung der Schälungsfläche und der beim Passieren des Schälungsbereichs durch die Rollenkörper auftretenden Veränderung von der Einwirkung einer Belastung zur ausbleibenden Einwirkung einer Belastung verändert sich der Lastbereich des Lagers insgesamt. Daher ist der Vibrationswert des Lagers relativ klein, wenn an der Lageroberfläche keine Schälung vorliegt. Wenn an der Lageroberfläche eine Schälung beginnt, erhöht sich die Vibrationsklasse des Lagers; wenn die Schälungsfläche der Lageroberfläche einen bestimmten Wert erreicht, verkleinert sich die Vibrationsklasse des Lagers allmählich.

In der tatsächlichen Anwendung kann man erkennen, dass bei unterschiedlichen Lagern und unter unterschiedlichen Betriebsbedingungen die Schälungsrate beim Auftreten einer Schälung der Oberfläche unterschiedlich ist. Deshalb können vorab an Lagern des gleichen Typs unter unterschiedlichen Betriebsbedingungen mehrfache Tests zu den Schälungsraten durchgeführt werden, die unterschiedlichen Schälungsflächen an der Oberfläche entsprechen. Anhand der in mehrfachen Tests erhaltenen Testparameter werden unterschiedlichen Betriebsbedingungen entsprechende Schälungsraten des Lagers erstellt.

Daher kann im Ausführungsbeispiel der vorliegenden Erfindung nach der Ermittlung der aktuellen Schälungsfläche der Lageroberfläche und anhand der aktuellen Betriebsbedingungen, in denen sich das Lager befindet, die den aktuellen Betriebsbedingungen entsprechende aktuelle Schälungsrate des Lagers ermittelt werden.

In Schritt S104 wird anhand der aktuellen Schälungsfläche der Lageroberfläche und der aktuellen Schälungsrate des Lagers die Restlebensdauer des Lagers ermittelt.

Im Ausführungsbeispiel der vorliegenden Erfindung kann vorab eine Abbildungsbeziehung zwischen der Schälungsfläche der Oberfläche und der Schälungsrate des Lagers auf der einen Seite und der Restlebensdauer des Lagers auf der anderen Seite aufgebaut werden. Beispielsweise wird eine Abbildungsbeziehung zwischen der Schälungsfläche der Oberfläche und der Schälungsrate des Lagers auf der einen Seite und der Restlebensdauer des Lagers auf der anderen Seite in Form einer Abbildungstabelle aufgebaut. Anschließend kann nach der Ermittlung der aktuellen Schälungsfläche der Lageroberfläche und der aktuellen Schälungsrate des Lagers die Restlebensdauer des Lagers ermittelt werden.

In der tatsächlichen Anwendung kann die Abbildungsbeziehung zwischen der Schälungsfläche der Oberfläche und der Schälungsrate des Lagers auf der einen Seite und der Restlebensdauer des Lagers auf der anderen Seite anhand in mehrfachen Tests ermittelter Testparameter aufgebaut werden.

Fig. 3 zeigt eine Kurvendarstellung zur korrespondierenden Beziehung zwischen der Schälungsfläche der Oberfläche und der Schälungsrate des Lagers auf der einen Seite und der Restlebensdauer des Lagers auf der anderen Seite im Ausführungsbeispiel der vorliegenden Erfindung. In Fig. 3 gibt die Ordinate den Anteil an, den die Schälungsfläche der Lageroberfläche an der gesamten effektiven Fläche der Rollbahn einnimmt; die Abszisse gibt den Prozentsatz der Restlebensdauer des Lagers in Relation zur Lebensdauer bis zum Auftreten der Schälung an der Arbeitsfläche des Lagers an, d. h. bei 100 % hat die Lebensdauer des Lagers die Lebensdauer bis zum Auftreten einer Schälung an der Arbeitsoberfläche des Lagers erreicht; und die Kurve 301 gibt die Schälungsrate des Lagers an.

Wenn der Anteil der Schälungsfläche der Lageroberfläche an der gesamten effektiven Fläche der Rollbahn auf 2,2/Z festgelegt wird, ist die Lebensdauer nach dem Auftreten einer Schälung an der Arbeitsoberfläche des Lagers beendet. Wenn der ermittelte Anteil, den die aktuelle Schälungsfläche der Lageroberfläche an der gesamten effektiven Fläche der Rollbahn einnimmt, 1,4/Z beträgt und die aktuelle Schälungsrate des Lagers ermittelt wurde, erhält man eine Restlebensdauer des Lager von (b - a) x t, wobei t die Lebensdauer vor dem Auftreten einer Schälung der Arbeitsfläche des Lagers ist und (b - a) der anteilige Prozentsatz ist, den die Restlebensdauer des Lagers an der Lebensdauer vor dem Auftreten einer Schälung der Arbeitsfläche des Lagers hat.

Daraus ist erkennbar, dass man nach der Erfassung des Vibrationssignals des Lagers einen aktuellen Vibrationswert des Lagers erhalten kann. Anhand des aktuellen Vibrationswerts des Lagers kann eine entsprechende aktuelle Schälungsfläche der Lageroberfläche ermittelt werden. Anhand der aktuellen Schälungsfläche der Lageroberfläche und der aktuellen Schälungsrate des Lagers unter den aktuellen Betriebsbedingungen kann man eine Restlebensdauer des Lagers erhalten, wobei der reguläre Betrieb der Maschinen und Geräte nicht beeinträchtigt wird.

In der tatsächlichen Anwendung kann man erkennen, dass die Drehzahl des Lagers einen bestimmten Einfluss auf die Lebensdauer des Lagers hat und dass auch die Temperatur des Lagers einen bestimmten Einfluss auf die Lebensdauer des Lagers ausübt.

Beim Aufbau der Abbildungsbeziehung zwischen der Schälungsfläche der Oberfläche und der Schälungsrate des Lagers auf der einen Seite und der Restlebensdauer des Lagers auf der anderen Seite können Temperaturinformationen des Lagers hinzugefügt werden, d. h. in der aufgebauten Abbildungsbeziehung steht die Restlebensdauer des Lagers jeweils in Zusammenhang mit der Schälungsfläche der Lageroberfläche, der Schälungslebensdauer des Lagers und der Temperatur des Lagers.

Bei der Ermittlung der Restlebensdauer des Lagers wird anhand der aktuellen Betriebsbedingungen des Lagers, der aktuellen Schälungsfläche der Lageroberfläche, der aktuellen Schälungsrate des Lagers und der aktuellen Temperaturinformationen des Lagers die Restlebensdauer des Lagers ermittelt und es kann die Genauigkeit bei der Ermittlung der Restlebensdauer des Lagers erhöht werden.

Entsprechend können beim Aufbau der Abbildungsbeziehung zwischen der Schälungsfläche der Oberfläche und der Schälungsrate des Lagers auf der einen Seite und der Restlebensdauer des Lagers auf der anderen Seite auch Drehzahlinformationen des Lagers hinzugefügt werden, d. h. in der aufgebauten Abbildungsbeziehung steht die Restlebensdauer des Lagers jeweils in Zusammenhang mit der Schälungsfläche der Lageroberfläche, der Schälungslebensdauer des Lagers und der Drehzahl des Lagers.

Bei der Ermittlung der Restlebensdauer des Lagers wird anhand der aktuellen Betriebsbedingungen des Lagers, der aktuellen Schälungsfläche der Lageroberfläche, der aktuellen Schälungsrate des Lagers und aktueller Drehzahlinformationen des Lagers die Restlebensdauer des Lagers ermittelt und es kann ebenfalls die Genauigkeit bei der Ermittlung der Restlebensdauer des Lagers erhöht werden.

Beim Aufbau der Abbildungsbeziehung zwischen der Schälungsfläche der Oberfläche und der Schälungsrate des Lagers auf der einen Seite und der Restlebensdauer des Lagers auf der anderen Seite können außerdem gleichzeitig Temperaturinformationen des Lagers und Drehzahlinformationen des Lagers hinzugefügt werden, d. h. in der aufgebauten Abbildungsbeziehung steht die Restlebensdauer des Lagers jeweils in Zusammenhang mit der Schälungsfläche der Lageroberfläche, der Schälungslebensdauer des Lagers, der Temperatur des Lagers und der Drehzahl des Lagers.

Bei der Ermittlung der Restlebensdauer des Lagers wird anhand der aktuellen Betriebsbedingungen des Lagers, der aktuellen Schälungsfläche der Lageroberfläche, der aktuellen Schälungsrate des Lagers, der aktuellen Temperaturinformationen des Lagers und der aktuellen Drehzahlinformationen des Lagers die Restlebensdauer des Lagers ermittelt und die Genauigkeit der ermittelten Restlebensdauer des Lagers kann weiter erhöht werden.

In einer konkreten Ausführung kann, wenn zu einem Zeitpunkt die gemessene aktuelle Schälungsfläche der Lageroberfläche größer ist als eine vorab festgelegte erste Fläche, festgestellt werden, dass an dem Lager ein Defekt aufgetreten ist. Bei einer Fortsetzung des Betriebs bei komplizierten Maschinensystemen kann dies möglicherweise dazu führen, dass die Maschinensysteme nicht mehr ordnungsgemäß arbeiten. In diesem Fall kann eine Erinnerung zum Tausch des Lagers erzeugt und gesendet werden, um das Arbeitspersonal daran zu erinnern, das Lager in dem Maschinensystem auszutauschen.

Beispielsweise kann die erzeugte Erinnerung zum Tausch des Lagers an eine Zustandsüberwachungseinrichtung des Maschinensystems gesendet werden und beispielsweise kann auf einem Bildschirm der Zustandsüberwachungseinrichtung die Anzeige "Lager tauschen" erscheinen. Wenn das Arbeitspersonal auf dem Bildschirm der Zustandsüberwachungseinrichtung die Anzeige "Lager tauschen" sieht, kann es den Tausch des Lagers veranlassen.

In dem obigen Ausführungsbeispiel der vorliegenden Erfindung ist erkennbar, dass sich nach dem Auftreten einer Schälung an der Lageroberfläche mit der Zunahme der Betriebsdauer des Lagers die Schälungsfläche an der Lageroberfläche allmählich vergrößert. Wenn sich die Schälungsfläche an der Lageroberfläche bis auf ein bestimmtes Ausmaß vergrößert hat und die Maschine oder das Gerät weiter betrieben wird, ist es sehr wahrscheinlich, dass dies dazu führt, dass die Maschine bzw. das Gerät nicht ordnungsgemäß funktionieren kann oder es sogar zu einem Unfall kommt.

In einer konkreten Ausführung kann, wenn zu einem Zeitpunkt die gemessene aktuelle Schälungsfläche der Lageroberfläche größer ist als eine vorab festgelegte zweite Fläche, eine Warnung erzeugt und gesendet werden, um das Arbeitspersonal daran zu erinnern, dass das Lager jetzt getauscht werden muss, um das Auftreten eines Unfalls zu verhindern.

Im Ausführungsbeispiel der vorliegenden Erfindung können die erste Fläche und die zweite Fläche jeweils entsprechend der tatsächlichen Anwendungssituation konfiguriert werden, wobei die erste Fläche kleiner ist als die zweite Fläche. In anderen Worten kann das Arbeitspersonal daran erinnert werden, das Lager zu tauschen, wenn die Schälungsfläche der Lageroberfläche relativ klein ist. Wenn die Schälungsfläche der Lageroberfläche relativ groß ist, wird das Arbeitspersonal daran erinnert, das Lager schnellstmöglich zu tauschen, um das Auftreten eines Unfalls zu verhindern.

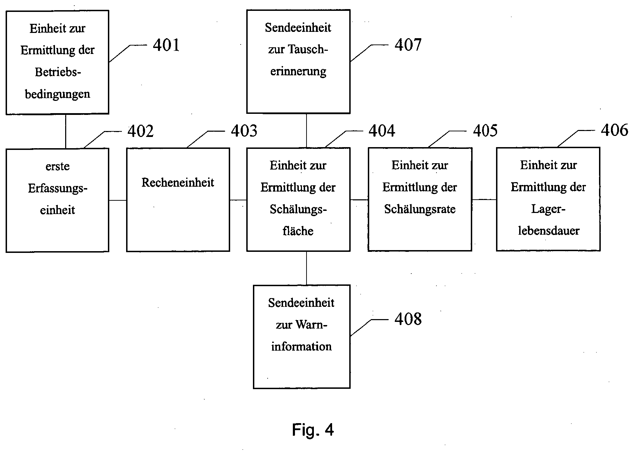

Wie in Fig. 4 gezeigt, stellt das Ausführungsbeispiel der vorliegenden Erfindung eine Vorrichtung für die Bewertung der Lebensdauer eines Lagers bereit, die Folgendes umfasst: eine Einheit zur Ermittlung der Betriebsbedingungen 401, eine erste Erfassungseinheit 402, eine Recheneinheit 403, eine Einheit zur Ermittlung der Schälungsfläche 404, eine Einheit zur Ermittlung der Schälungsrate 405 und eine Einheit zur Ermittlung der Lagerlebensdauer 405, wobei:

die Einheit zur Ermittlung der Betriebsbedingungen 401 verwendet wird, um aktuelle Betriebsbedingungen des Lagers zu ermitteln;

die erste Erfassungseinheit 402 verwendet wird, um ein aktuelles Vibrationssignal des Lagers unter den aktuellen Betriebsbedingungen zu erfassen;

die Recheneinheit 403 verwendet wird, um einen aktuellen Vibrationswert des Lagers zu berechnen;

die Einheit zur Ermittlung der Schälungsfläche 404 verwendet wird, um eine dem aktuellen Vibrationswert des Lagers entsprechende aktuelle Schälungsfläche der Lageroberfläche zu ermitteln;

die Einheit zur Ermittlung der Schälungsrate 405 verwendet wird, um eine aktuelle Schälungsrate des Lagers unter den aktuellen Betriebsbedingungen zu ermitteln;

und die Einheit zur Ermittlung der Lagerlebensdauer 406 verwendet wird, um anhand der aktuellen Schälungsfläche der Lageroberfläche und der aktuellen Schälungsrate des Lagers eine Restlebensdauer des Lagers zu ermitteln.

In einer konkreten Ausführung kann die Vorrichtung für die Bewertung der Lebensdauer eines Lagers weiterhin eine zweite Erfassungseinheit (nicht dargestellt) umfassen, die verwendet wird, um aktuelle Temperaturinformationen des Lagers zu erfassen; wobei die Einheit zur Ermittlung der Lagerlebensdauer 406 verwendet werden kann, um anhand der aktuellen Schälungsfläche der Lageroberfläche, der aktuellen Schälungsrate des Lagers und der aktuellen Temperaturinformationen des Lagers die Restlebensdauer des Lagers zu ermitteln.

In einer konkreten Ausführung kann die Vorrichtung für die Bewertung der Lebensdauer eines Lagers weiterhin eine dritte Erfassungseinheit (in Fig. 4 nicht dargestellt) umfassen, die verwendet wird, um aktuelle Drehzahlinformationen des Lagers zu erfassen; wobei die Einheit zur Ermittlung der Lagerlebensdauer 406 verwendet werden kann, um anhand der aktuellen Schälungsfläche der Lageroberfläche, der aktuellen Schälungsrate des Lagers und der aktuellen Drehzahlinformationen des Lagers die Restlebensdauer des Lagers zu ermitteln.

In einer konkreten Ausführung umfasst die Vorrichtung für die Bewertung der Lebensdauer eines Lagers weiterhin eine vierte Erfassungseinheit (in Fig. 4 nicht dargestellt), die verwendet wird, um aktuelle Temperaturinformationen des Lagers und aktuelle Drehzahlinformationen des Lagers zu erfassen; wobei die Einheit zur Ermittlung der Lagerlebensdauer 406 verwendet werden kann, um anhand der aktuellen Temperaturinformationen des Lagers, der aktuellen Drehzahlinformationen des Lagers, der aktuellen Schälungsfläche der Lageroberfläche und der aktuellen Schälungsrate des Lagers die Restlebensdauer des Lagers zu ermitteln.

In einer konkreten Ausführung kann die Einheit zur Ermittlung der Schälungsfläche 404 verwendet werden, um anhand des aktuellen Vibrationswerts eine aktuelle Vibrationsklasse des Lagers zu berechnen und um eine der aktuellen Vibrationsklasse des Lagers entsprechende aktuelle Schälungsfläche der Lageroberfläche zu ermitteln.

In einer konkreten Ausführung kann die Vorrichtung für die Bewertung der Lebensdauer eines Lagers weiterhin eine Sendeeinheit zur Tauscherinnerung 407 umfassen, die verwendet wird, um eine Erinnerungsinformation zum Tausch des Lagers zu senden, wenn die gemessene aktuelle Schälungsfläche der Lageroberfläche größer ist als eine vorab festgelegte erste Fläche.

In einer konkreten Ausführung kann die Vorrichtung für die Bewertung der Lebensdauer eines Lagers weiterhin eine Sendeeinheit zur Warninformation 408 umfassen, die verwendet wird, um eine Warninformation zu senden, wenn die gemessene aktuelle Schälungsfläche der Lageroberfläche größer ist als eine vorab festgelegte zweite Fläche; wobei die zweite Fläche größer ist als die erste Fläche.

Ein durchschnittlicher Fachmann des technischen Gebiets kann verstehen, dass alle Schritte oder ein Teil der Schritte in sämtlichen Verfahren des oben aufgeführten Ausführungsbeispiels durch ein Programm vollzogen werden können, das Anweisungen an eine entsprechende Hardware gibt. Dieses Programm kann auf einem computerlesbaren Speichermedium gespeichert werden, wobei das Speichermedium Folgendes umfassen kann: ROM, RAM, Magnetspeicher, optische Speicher etc.

**Patentansprüche**

1. Verfahren für eine Bewertung der Lebensdauer eines Lagers, das Folgendes umfasst:

eine Ermittlung aktueller Betriebsbedingungen des Lagers;
eine Erfassung eines aktuellen Vibrationssignals des Lagers unter den aktuellen Betriebsbedingungen und eine Berechnung eines aktuellen Vibrationswerts des Lagers,

**gekennzeichnet durch**

eine Ermittlung einer dem aktuellen Vibrationswert des Lagers entsprechenden aktuellen Schälungsfläche der Lageroberfläche sowie einer aktuellen Schälungsrate des Lagers unter den aktuellen Betriebsbedingungen; und eine Ermittlung einer Restlebensdauer des Lagers anhand der aktuellen Schälungsfläche der Lageroberfläche und der aktuellen Schälungsrate des Lagers.

2. Verfahren für die Bewertung der Lebensdauer eines Lagers nach Anspruch 1, **dadurch gekennzeichnet, dass** es weiterhin eine Ermittlung aktueller Temperaturinformationen des Lagers umfasst; wobei die Ermittlung der Restlebensdauer des Lagers anhand der aktuellen Schälungsfläche der Lageroberfläche und der aktuellen Schälungsrate des Lagers die Ermittlung der Restlebensdauer des Lagers anhand der aktuellen Schälungsfläche der Lageroberfläche, der aktuellen Schälungsrate des Lagers und der aktuellen Temperaturinformationen des Lagers umfasst.

3. Verfahren für die Bewertung der Lebensdauer eines Lagers nach Anspruch 1, **dadurch gekennzeichnet, dass** es weiterhin eine Ermittlung aktueller Drehzahlinformationen des Lagers umfasst; wobei die Ermittlung der Restlebensdauer des Lagers anhand der aktuellen Schälungsfläche der Lageroberfläche und der aktuellen Schälungsrate des Lagers die Ermittlung der Restlebensdauer des Lagers anhand der aktuellen Schälungsfläche der Lageroberfläche, der aktuellen Schälungsrate des Lagers und der aktuellen Drehzahlinformationen des Lagers umfasst.

4. Verfahren für die Bewertung der Lebensdauer eines Lagers nach Anspruch 1, **dadurch gekennzeichnet, dass** es weiterhin eine Ermittlung aktueller Temperaturinformationen des Lagers und aktueller Drehzahlinformationen des Lagers umfasst; wobei die Ermittlung der Restlebensdauer des Lagers anhand der aktuellen Schälungsfläche der Lageroberfläche und der aktuellen Schälungsrate des Lagers die Ermittlung der Restlebensdauer des Lagers anhand der aktuellen Temperaturinformationen des Lagers, der aktuellen Drehzahlinformationen des Lagers, der aktuellen Schälungsfläche der Lageroberfläche und der aktuellen Schälungsrate des Lagers umfasst.

5. Verfahren für die Bewertung der Lebensdauer eines Lagers nach Anspruch 1, **dadurch gekennzeichnet, dass** die Ermittlung der dem aktuellen Vibrationswert des Lagers entsprechenden aktuellen Schälungsrate der Lageroberfläche Folgendes umfasst:

eine Ermittlung einer aktuellen Vibrationsklasse des Lagers anhand des aktuellen Vibrationswerts des Lagers; und eine Ermittlung einer der aktuellen Vibrationsklasse des Lagers entsprechenden aktuellen Schälungsfläche der Lageroberfläche.

6. Verfahren für die Bewertung der Lebensdauer eines Lagers nach Anspruch 1, **dadurch gekennzeichnet, dass** es nach der Ermittlung der aktuellen Schälungsfläche der Lageroberfläche weiterhin Folgendes umfasst: ein Senden einer Erinnerungsinformation zum Tausch des Lagers, wenn die gemessene aktuelle Schälungsfläche der Lageroberfläche größer ist als eine vorab festgelegte erste Fläche.

7. Verfahren für die Bewertung der Lebensdauer eines Lagers nach Anspruch 6, **dadurch gekennzeichnet, dass** es nach dem Senden der Erinnerungsinformation zum Tausch des Lagers weiterhin Folgendes umfasst: ein Senden einer Warninformation, wenn die gemessene aktuelle Schälungsfläche der Lageroberfläche größer ist als eine vorab festgelegte zweite Fläche; wobei die zweite Fläche größer ist als die erste Fläche.

8. Eine Vorrichtung für die Bewertung der Lebensdauer eines Lagers, wobei die Vorrichtung Folgendes umfasst:

eine Einheit zur Ermittlung der Betriebsbedingungen, die verwendet wird, um aktuelle Betriebsbedingungen des Lagers zu ermitteln; eine erste Erfassungseinheit, die verwendet wird, um ein aktuelles Vibrationssignal des Lagers unter den aktuellen Betriebsbedingungen zu erfassen; eine Recheneinheit, die verwendet wird, um einen aktuellen Vibrationswert des Lagers zu berechnen; **gekennzeichnet durch** eine Einheit zur Ermittlung der Schälungsfläche, die verwendet wird, um eine dem aktuellen Vibrationswert des Lagers entsprechende aktuelle Schälungsfläche der Lageroberfläche zu ermitteln; eine Einheit zur Ermittlung der Schälungsrate, die verwendet wird, um eine aktuelle Schälungsrate des Lagers unter den aktuellen Betriebsbedingungen zu ermitteln;

und eine Einheit zur Ermittlung der Lagerlebensdauer, die verwendet wird, um anhand der aktuellen Schälungsfläche der Lageroberfläche und der aktuellen Schälungsrate des Lagers eine Restlebensdauer des Lagers zu ermitteln.

9. Vorrichtung für die Bewertung der Lebensdauer eines Lagers nach Anspruch 8, **dadurch gekennzeichnet, dass** die Vorrichtung für die Bewertung der Lebensdauer eines Lagers weiterhin eine zweite Erfassungseinheit umfasst, die verwendet wird, um aktuelle Temperaturinformationen des Lagers zu erfassen; wobei die Einheit zur Ermittlung der Lagerlebensdauer verwendet wird, um anhand der aktuellen Schälungsfläche der Lageroberfläche, der aktuellen Schälungsrate des Lagers und der aktuellen Temperaturinformationen des Lagers eine Restlebensdauer des Lagers zu ermitteln.

10. Vorrichtung für die Bewertung der Lebensdauer eines Lagers nach Anspruch 8, **dadurch gekennzeichnet, dass** die Vorrichtung für die Bewertung der Lebensdauer eines Lagers weiterhin eine dritte Erfassungseinheit umfasst, die verwendet wird, um aktuelle Drehzahlinformationen des Lagers zu erfassen; wobei die Einheit zur Ermittlung der Lagerlebensdauer verwendet wird, um anhand der aktuellen Schälungsfläche der Lageroberfläche, der aktuellen Schälungsrate des Lagers und der aktuellen Drehzahlinformationen des Lagers eine Restlebensdauer des Lagers zu ermitteln.

11. Vorrichtung für die Bewertung der Lebensdauer eines Lagers nach Anspruch 8, **dadurch gekennzeichnet, dass** die Vorrichtung für die Bewertung der Lebensdauer eines Lagers weiterhin eine vierte Erfassungseinheit umfasst, die verwendet wird, um aktuelle Temperaturinformationen des Lagers und aktuelle Drehzahlinformationen des Lagers zu erfassen; wobei die Einheit zur Ermittlung der Lagerlebensdauer verwendet wird, um anhand der aktuellen Temperaturinformationen des Lagers, der aktuellen Drehzahlinformationen des Lagers, der aktuellen Schälungsfläche der Lageroberfläche und der aktuellen Schälungsrate des Lagers eine Restlebensdauer des Lagers zu ermitteln.

12. Vorrichtung für die Bewertung der Lebensdauer eines Lagers nach Anspruch 8, **dadurch gekennzeichnet, dass** die Einheit zur Ermittlung der Schälungsfläche verwendet wird, um anhand des aktuellen Vibrationswerts eine aktuelle Vibrationsklasse des Lagers zu berechnen und um eine der aktuellen Vibrationsklasse des Lagers entsprechende aktuelle Schälungsfläche der Lageroberfläche zu ermitteln.

13. Vorrichtung für die Bewertung der Lebensdauer eines Lagers nach Anspruch 8, **dadurch gekennzeichnet, dass** sie weiterhin eine Sendeeinheit zur Tauscherinnerung umfasst, die verwendet wird, um eine Erinnerungsinformation zum Tausch des Lagers zu senden, wenn die gemessene aktuelle Schälungsfläche der Lageroberfläche größer ist als eine vorab festgelegte erste Fläche.

14. Vorrichtung für die Bewertung der Lebensdauer eines Lagers nach Anspruch 13, **dadurch gekennzeichnet, dass** sie weiterhin eine Sendeeinheit zur Warninformation umfasst, die verwendet wird, um eine Warninformation zu senden, wenn die gemessene aktuelle Schälungsfläche der Lageroberfläche größer ist als eine vorab festgelegte zweite Fläche; wobei die zweite Fläche größer ist als die erste Fläche.

## Claims

1. A method for evaluating the service life of a bearing, which comprises the following:

   obtaining the current working condition of the bearing;
   acquiring a current vibration signal of the bearing in the current working condition, and calculating a current vibration value of the bearing, **characterised by** obtaining a current surface scaling area of the bearing corresponding to the current vibration value of the bearing and a current scaling rate of the bearing in the current working condition;
   and obtaining a remaining service life of the bearing based on the current surface scaling area of the bearing and the current scaling rate of the bearing.

2. The method for evaluating the service life of a bearing according to claim 1, **characterised in that** it further comprises obtaining current temperature information of the bearing;
   wherein obtaining the remaining service life of the bearing based on the current surface scaling area of the bearing and the current scaling rate of the bearing comprises obtaining the remaining service life of the bearing based on the current surface scaling area of the bearing, the current scaling rate of the bearing, and the current temperature information for the bearing.

3. The method for evaluating the service life of a bearing according to claim 1, **characterised in that** it further comprises obtaining current speed information of the bearing;
wherein obtaining the remaining service life of the bearing based on the current surface scaling area of the bearing and the current scaling rate of the bearing comprises obtaining the remaining service life of the bearing based on the current surface scaling area of the bearing, the current scaling rate of the bearing, and the current speed information of the bearing.

4. The method for evaluating the service life of a bearing according to claim 1, **characterised in that** it further comprises obtaining current temperature information of the bearing and current speed information of the bearing;
wherein obtaining the remaining service life of the bearing based on the current surface scaling area of the bearing and the current scaling rate of the bearing comprises obtaining the remaining service life of the bearing based on the current temperature information of the bearing, the current speed information of the bearing, the current surface scaling area of the bearing and the current scaling rate of the bearing.

5. The method for evaluating the service life of a bearing according to claim 1, **characterised in that** obtaining the current scaling rate of the bearing surface corresponding to the current vibration value of the bearing comprises the following:

    obtaining a current vibration class of the bearing based on the current vibration value of the bearing; and
    obtaining a current surface scaling area of the bearing corresponding to the current vibration class of the bearing.

6. The method for evaluating the service life of a bearing according to claim 1, **characterised in that**, after the current surface scaling area of the bearing has been obtained, it further comprises:
transmitting a reminder message to replace the bearing if the measured current surface scaling area of the bearing is greater than a predetermined first area.

7. The method for evaluating the service life of a bearing according to claim 6, **characterised in that**, after transmitting the reminder message to replace the bearing, it further comprises:
transmitting a warning message if the measured current surface scaling area of the bearing is greater than a predetermined second area; wherein the second area is greater than the first area.

8. A device for evaluating the service life of a bearing, wherein the apparatus comprises the following:

    a working condition obtaining unit, which is used to obtain the current working condition of the bearing;
    a first acquisition unit, which is used to acquire a current vibration signal of the bearing in the current working condition;
    a calculating unit, which is used to calculate a current vibration value of the bearing;
    **characterised by**
    a scaling area obtaining unit, which is used to obtain a current scaling area of the bearing surface corresponding to the current vibration value of the bearing;
    a scaling rate obtaining unit, which is used to obtain a current scaling rate of the bearing in the current working condition;
    and a bearing service life obtaining unit, which is used to obtain a remaining service life of the bearing based on the current surface scaling area of the bearing and the current scaling rate of the bearing.

9. The device for evaluating the service life of a bearing according to claim 8, **characterised in that** the device for evaluating the service life of a bearing further comprises a second acquisition unit, which is used to acquire current temperature information of the bearing; wherein the bearing service life obtaining unit is used to obtain a remaining service life of the bearing based on the current surface scaling area of the bearing, the current scaling rate of the bearing, and the current temperature information of the bearing.

10. The device for evaluating the service life of a bearing according to claim 8, **characterised in that** the device for evaluating the service life of a bearing further comprises a third acquisition unit, which is used to acquire current speed information of the bearing; wherein the bearing service life obtaining unit is used to obtain a remaining service life of the bearing based on the current surface scaling area of the bearing, the current scaling rate of the bearing, and the current speed information of the bearing.

11. The device for evaluating the service life of a bearing according to claim 8, **characterised in that** the device for evaluating the service life of a bearing further comprises a fourth acquisition unit, which is used to acquire current temperature information of the bearing and current speed information of the bearing, wherein the bearing service life obtaining unit is used to obtain a remaining service life of the bearing based on the current temperature information of the bearing, the current speed information of the bearing, the current surface scaling area of the bearing, and the current scaling rate of the bearing.

12. The device for evaluating the service life of a bearing according to claim 8, **characterised in that** the scaling area obtaining unit is used to calculate a current vibration class of the bearing based on the current vibration value and to calculate a current surface scaling area of the bearing corresponding to the current vibration class of the bearing.

13. The device for evaluating the service life of a bearing according to claim 8, **characterised in that** it further comprises a replacement reminder transmitting unit, which is used to transmit a reminder message to replace the bearing when the measured current surface scaling area of the bearing is greater than a predetermined first area.

14. The device for evaluating the service life of a bearing according to claim 13, **characterised in that** it further comprises a warning message transmitting unit, which is used to transmit a warning message when the measured current surface scaling area of the bearing is greater than a predetermined second area; wherein the second area is greater than the first area.

**Revendications**

1. Procédé d'évaluation de la durée de vie d'un palier, comprenant :

une détermination des conditions de fonctionnement actuelles du palier ;
une détection d'un signal de vibration actuel du palier dans les conditions de fonctionnement actuelles et un calcul d'une valeur de vibration actuelle du palier, **caractérisé par** une détermination d'une zone de décorticage actuelle de la surface du palier correspondant à la valeur de vibration actuelle du palier et une vitesse de décorticage actuelle du palier dans les conditions de fonctionnement actuelles ;
et une détermination d'une durée de vie restante du palier à partir de la zone de décorticage actuelle de la surface du palier et de la vitesse de décorticage actuelle du palier.

2. Procédé d'évaluation de la durée de vie d'un palier selon la revendication 1, **caractérisé en ce qu'**il comprend en outre une détermination des informations de température actuelles du palier ;
la détermination de la durée de vie restante du palier à partir de la zone de décorticage actuelle de la surface de palier et de la vitesse de décorticage actuelle du palier comprenant la détermination de la durée de vie restante du palier à partir de la zone de décorticage actuelle de la surface de palier, le taux de décorticage actuel du palier et les informations de température actuelles du palier.

3. Procédé d'évaluation de la durée de vie d'un palier selon la revendication 1, **caractérisé en ce qu'**il comprend en outre une détermination des informations de vitesse actuelles du palier ; la détermination de la durée de vie restante du palier à partir de la zone de décorticage actuelle de la surface de palier et du taux de décorticage actuel du palier comprenant la détermination de la durée de vie restante du palier à partir de la zone de décorticage actuelle de la surface de palier, le taux de décorticage actuel du palier et les informations de vitesse actuelles du palier.

4. Procédé d'évaluation de la durée de vie d'un palier selon la revendication 1, **caractérisé en ce qu'**il comprend en outre une détermination des informations de température actuelles du palier et des informations de vitesse actuelles du palier ;
la détermination de la durée de vie restante du palier à partir de la zone de décorticage actuelle de la surface du palier et du taux de décorticage actuel du palier comprenant la détermination de la durée de vie restante du palier à l'aide des informations de température actuelles du palier, des informations de vitesse actuelles du palier, de la zone de décorticage actuelle de la surface du palier et du taux de décorticage actuel du palier.

5. Procédé d'évaluation de la durée de vie d'un palier selon la revendication 1, **caractérisé en ce que** la détermination du taux de décorticage actuel de la surface du palier correspondant à la valeur de vibration actuelle du palier comprend les étapes suivantes :

une détermination d'une classe de vibration actuelle du palier à partir de la valeur de vibration actuelle du palier ; et

une détermination d'une zone de décorticage actuelle de la surface du palier correspondant à la classe de vibration actuelle du palier.

6. Procédé d'évaluation de la durée de vie d'un palier selon la revendication 1, **caractérisé en ce qu'**après avoir déterminé la zone de décorticage actuelle de la surface du palier, il comprend en outre :
l'envoi des informations de rappel pour remplacer le palier si la zone de décorticage actuelle mesurée de la surface du palier est plus grande qu'une première zone prédéfinie.

7. Procédé d'évaluation de la durée de vie d'un palier selon la revendication 6, **caractérisé en ce qu'**après l'envoi de l'information de rappel de remplacement du palier, il comprend en outre : l'envoi d'informations d'avertissement si la zone de décorticage actuelle mesurée de la surface du palier est plus grande qu'une seconde zone prédéfinie ; la seconde zone étant plus grande que la première zone.

8. Dispositif d'évaluation de la durée de vie d'un palier, le dispositif comprenant :

une unité de détermination des conditions de fonctionnement laquelle est utilisée pour déterminer les conditions de fonctionnement actuelles du palier ;
une première unité de détection laquelle est utilisée pour détecter un signal de vibration actuel du palier dans les conditions de fonctionnement actuelles ;
une unité centrale utilisée pour calculer une valeur de vibration actuelle du palier ; **caractérisé par**
une unité de détermination de la zone de décorticage qui permet de déterminer une zone de décorticage actuelle de la surface du palier correspondant à la valeur de vibration actuelle du palier ;
une unité de détermination du taux de décorticage laquelle est utilisée pour déterminer un taux de décorticage actuel du palier dans les conditions de fonctionnement actuelles ;
et une unité pour déterminer la durée de vie du palier laquelle est utilisée pour déterminer une durée de vie restante du palier à l'aide de la zone de décorticage actuelle de la surface du palier et du taux de décorticage actuel du palier.

9. Dispositif d'évaluation de la durée de vie d'un palier selon la revendication 8, **caractérisé en ce que** le dispositif d'évaluation de la durée de vie d'un palier comprend en outre une deuxième unité de détection qui est utilisée pour acquérir des informations de température actuelles du palier ; l'unité de détermination de la durée de vie du palier étant utilisée pour déterminer une durée de vie restante du palier à l'aide de la zone de décorticage actuelle de la surface du palier, du taux de décorticage actuel du palier et des informations de température actuelles du palier.

10. Dispositif d'évaluation de la durée de vie d'un palier selon la revendication 8, **caractérisé en ce que** le dispositif d'évaluation de la durée de vie d'un palier comprend en outre une troisième unité de détection qui est utilisée pour acquérir des informations de vitesse actuelles du palier ; l'unité de détermination de la durée de vie du palier étant utilisée pour déterminer une durée de vie restante du palier à l'aide de la zone de décorticage actuelle de la surface du palier, du taux de décorticage actuel du palier et des informations de vitesse actuelles du palier.

11. Dispositif d'évaluation de la durée de vie d'un palier selon la revendication 8, **caractérisé en ce que** le dispositif d'évaluation de la durée de vie d'un palier comprend en outre une quatrième unité de détection qui est utilisée pour acquérir des informations de température actuelles du palier et de la vitesse actuelle du palier ; l'unité de détermination de la durée de vie du palier étant utilisée pour déterminer une durée de vie restante du palier à partir des informations de température actuelles du palier, des informations de vitesse actuelles du palier, de la zone de décorticage actuelle de la surface du palier et du taux de décorticage actuel du palier.

12. Dispositif d'évaluation de la durée de vie d'un palier selon la revendication 8, **caractérisé en ce que** l'unité de détermination de la zone de décorticage est utilisée pour calculer une classe de vibration actuelle du palier à partir de la valeur de vibration actuelle et pour calculer une zone de décorticage actuelle de la surface du palier correspondant à la classe de vibration actuelle du palier.

13. Dispositif d'évaluation de la durée de vie d'un palier selon la revendication 8, **caractérisé en ce qu'**il comprend en outre une unité d'envoi de rappel de remplacement permettant d'envoyer une information de rappel de remplacement du palier lorsque la zone de décorticage actuelle mesurée de la surface du palier est plus grande qu'une première zone prédéfinie.

14. Dispositif d'évaluation de la durée de vie d'un palier selon la revendication 13, **caractérisé en ce qu'**il comprend en outre une unité d'envoi d'informations d'avertissement qui est utilisée pour envoyer des informations d'avertissement lorsque la zone de décorticage actuelle mesurée de la surface du palier est plus grande qu'une seconde zone prédéfinie, la seconde zone étant plus grande que la première zone.

Fig. 1

Anteil der Schälungsfläche der Oberfläche

Fig. 2

Lebensdauer des Lagers

Fig. 3

| Einheit zur Ermittlung der Betriebs- bedingungen | 401 | | Sendeeinheit zur Tausch- erinnerung | 407 | | |
|---|---|---|---|---|---|---|

| erste Erfassungs- einheit | Recheneinheit | Einheit zur Ermittlung der Schälungs- fläche | Einheit zur Ermittlung der Schälungsrate | Einheit zur Ermittlung der Lager- lebensdauer |
|---|---|---|---|---|

402 — 403 — 404 — 405 — 406

| Sendeeinheit zur Warn- information | 408 |
|---|---|

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 201611095596
- JP H08159151 A
- US 2012239716 A1
- JP 57086735 A
- US 2002046012 A1
- EP 3029449 A1